# EUROPÄISCHE PATENTANMELDUNG

(11) **EP 4 488 899 A1**
(43) Veröffentlichungstag der Anmeldung: **08.01.2025**
(21) Anmeldenummer: 23183543.0
(22) Anmeldetag: 05.07.2023
(51) Int. Cl.: G06Q 10/063, G06Q 10/20, G06Q 50/04, G06Q 10/30, H01L 21/66

(54) **VERFAHREN UND ANORDNUNG ZUR LEBENSDAUERABSCHÄTZUNG DISKRETER ELEKTRONISCHER KOMPONENTEN**

(71) Anmelder: Siemens Aktiengesellschaft, 80333 München (DE)
(72) Erfinder: Jeske, Nora, 10555 Berlin (DE); Müller, Bernd, 16259 Falkenberg (DE); Santos Wilke, Hans, 85599 Parsdorf (DE); Schwarz, Markus, 80798 München (DE)
(74) Vertreter: Siemens Patent Attorneys

(57) **Zusammenfassung**

Die Erfindung betrifft ein zweiteiliges Verfahren, und Anordnung dazu, zur Lebensdauerabschätzung diskreter elektronischer Komponenten nach einem Feldeinsatz (comp_ret), umfassend einen ersten Schritt mit einem automatisierbaren Datenabgleich (Δ) sowie einen zweiten Schritt mit einem Bewertungsverfahren (eva), basierend auf Daten (int), welche komponentenspezifische als auch feldeinsatzspezifische Daten umfassen. Rare Bauelemente, welche gleichzeitig leicht zu montieren und entsprechend leicht zu demontieren sind, können so einem Re-Use anstelle eines Materialrecyclings zugeführt werden.

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zur Lebensdauerabschätzung elektronischer Komponenten nach einem Feldeinsatz, sowie Anordnung zur Durchführung des Verfahrens.

### Stand der Technik:

Aufgrund der Verknappung von Bauteilen und einem verstärkten Bestreben, Elektronikprodukte in einem geschlossenen Kreislauf zu führen, um die Nachhaltigkeit der Produkte zu erhöhen, werden Bewertungsmethoden zur Beurteilung der Restlebensdauer erforderlich. Die Produktbewertung bezüglich ihrer Nachhaltigkeit gewinnt heute rasant an Bedeutung und bisherige Methoden zur Restlebensdauerabschätzung sind noch wenig vorhanden und noch nicht ausreichend zuverlässig.

Bisher kann eine Abschätzung einer Restlebensdauer eines elektronischen Bauteils oder eines Bauelements innerhalb eines Bauteils nach einem Feldrücklauf nur sehr eingeschränkt bis gar nicht definiert werden. Ist ein Produkt ausgefallen, so wird bis jetzt in den meisten Fällen das gesamte Produkt, also die gesamte Elektronik entsorgt. Gegebenenfalls wird es einem Recyclingprozess zugeführt, in welchem eine Materialrückgewinnung, zumindest eine teilweise Materialrückgewinnung erfolgt.

Bisherige Verfahren erlauben noch keine Wiederverwendung, noch kein sogenanntes Re-Use von einzelnen Komponenten einer elektronischen Einheit. Sehr häufig jedoch sind einzelne Komponenten sehr unterschiedlicher Lebensdauer in Baugruppen, Bauteilen oder allgemein elektronischen Produkten verbaut. Für diese Komponenten, die in ihrer Funktionsfähigkeit noch kaum eingeschränkt sind, ist bislang keine Wiederverwendung vorgesehen, da die Bestimmung der Restlebensdauer bzw. die Identifikation der langlebigen Komponenten bisher aus Kostengründen aufgrund der noch fehlenden Bewertungsmethoden überhaupt nicht erfolgt.

Ein Hinderungsgrund beispielsweise sind fehlende Missionprofiles, also Felddaten, die einen Aufschluss darüber geben könnten, welchen Umweltbelastungen das Produkt während des Einsatzes ausgesetzt war. Darüber hinaus gibt es auch noch keine Berechnungs- oder Bewertungsgrundlagen, in die diese Felddaten einfließen könnten. Bisher finden Lebensdauerberechnungen bzw. Lebensdauerabschätzungen vor allem in der Entwicklungsphase eines Produktes statt. Hier werden als Methoden beispielsweise lineare Schadensmodelle oder das Coffin Manson Modell angewandt. Mit dem Coffin-Manson-Modell wird beispielsweise in der Werkstofftechnik der Verlauf plastischer Materialverformungen beschrieben.

Demnach sind die Vorhersagemöglichkeiten so unzuverlässig, dass nach einem ersten Produktzyklus in der Regel das gesamte Produkt bzw. alle dessen elektronischen Bauteile entsorgt werden. Bislang werden diese höchstens einem stofflichen Recyclingprozess zugeführt.

Alternative Lösungen bestehen hauptsächlich in einem Rework von Produkten. Sollte ein Rework jedoch nicht möglich sein, besteht bisher nur die Möglichkeit eines Recyclings der einzelnen Produktteile, unabhängig davon, ob diese noch funktional sind oder nicht.

Ausgehend vom zuvor beschriebenen Stand der Technik liegt der Erfindung die Aufgabe zugrunde, ein Verfahren sowie eine Anordnung zur Durchführung des Verfahrens anzugeben, welche eine zumindest teilweise Weiterverwendung elektronischer Bauteile oder Komponenten daraus erlaubt.

### Lösung der Aufgabe:

Die Aufgabe wird durch die Merkmale des unabhängigen Patentanspruchs 1 gelöst. Die auf die Anordnung bezogene Aufgabe wird durch die Merkmale des Anspruchs 12 gelöst. Ausgestaltungen der Erfindung, die einzeln oder in Kombination miteinander einsetzbar sind, sind Gegenstand der Unteransprüche.

### Beschreibung der Erfindung:

Das erfindungsgemäße Verfahren zur Lebensdauerabschätzung diskreter elektronischer Komponenten nach einem Feldeinsatz umfasst einen ersten Schritt mit einem automatisierbaren Datenabgleich sowie einen zweiten Schritt mit einem Bewertungsverfahren, basierend auf Daten, welche komponentenspezifische als auch feldeinsatzspezifische Daten umfasst.

Der Vorteil dieser Vorgehensweise liegt darin, dass mit geringem Aufwand insbesondere wenigen Analyseschritten eine geeignete Auswahl, der für ein Re-Use geeigneter Komponenten getroffen werden kann.

Als Komponente kann im Kontext der Anmeldung ein Bauteil verstanden werden, welches in einem größeren Verbund, insbesondere einer Baugruppe oder in einem Verbund eines elektronischen Geräts eingesetzt wird. Als Komponente kann aber auch eine Bauteilkomponente verstanden werden. Demnach kann unter einem Komponentenverbund ein Bauteil verstanden werden, welches mehrere Bauteilkomponenten umfasst, aber es kann auch eine Baugruppe verstanden werden, welche mehrere Bauteile im Sinne von Komponenten umfasst.

Ein Feldeinsatz unterscheidet sich zu einem Testeinsatz bzw. einer Qualitätskontrolle nach der Herstellung insbesondere dadurch, dass ungeplante, unabsehbare und im Vorfeld ungetestete Belastungsereignisse erfolgen können. Von einem Feldeinsatz wird gesprochen, sobald eine einmalige Verwendung des elektronischen Bauteils oder des elektronischen Produkts erfolgt ist. Ein Feldeinsatz beinhaltet Ungewissheit über die Einsatzbedingungen wie beispielsweise Laufzeit, Temperaturbeanspruchung oder Umwelteinflüsse. Nach einem Feldeinsatz können Bauteilkomponenten oder Baugruppenteile bereits beschädigt, defekt oder stark ermüdet vorliegen, insbesondere durch Materialermüdungen. Nach einem Feldeinsatz kann ein Bauteil aber auch nahezu unversehrt vorliegen, wenn es sich beispielsweise um einen einmaligen sehr kurzen und/oder unter extrem wenig belastenden Einsatzbedingungen handelt.

In einer vorteilhaften Ausgestaltung der Erfindung liegen die im Abschätzungsverfahren befindlichen diskreten elektronischen Komponenten für den Verfahrensschritt des automatisierbaren Datenabgleichs in einem Komponentenverbund vor. Insbesondere wird ein vollständiger Komponentenverbund, wie er auch im Feldeinsatz war, dem ersten Schritt des Verfahrens zum automatisierbaren Datenabgleich zugeführt. Dies hat insbesondere den Vorteil, dass kein unnötiger Demontageschritt erfolgt, wenn der automatisierbare Datenabgleichschritt das Ergebnis vorbringt, dass keine der vorliegenden elektronischen Komponenten für eine Weiterverwendung geeignet ist.

In einer weiteren Ausgestaltung des erfindungsgemäßen Verfahrens wird auf Basis eines Ergebnisses des automatisierbaren Datenabgleichs eine Vorauswahl von Komponenten getroffen, welche dann dem zweiten Schritt des Verfahrens, dem Bewertungsverfahren zugeführt werden.

Die Vorteile liegen also zum einen darin, dass durch die Vorgehensweise schrittweise eine geeignete Auswahl für ein Re-Use geeigneter Komponenten getroffen werden kann, dass diese Vorgehensweise sehr effektiv in wenigen Analyseschritten erfolgt, da mit einem ersten automatisierten Datenabgleich eine Vorauswahl getroffen wird und nur die vorausgewählten Komponenten dem weiteren zweiten Schritt des Verfahrens, nämlich dem Bewertungsverfahren zugeführt werden. Bei dem zweiten Schritt, dem Bewertungsverfahren, können dann beispielsweise Methoden zur Bewertung angewandt werden, wie sie bisher in Entwicklungsphasen von Produkten zur Lebensdauerberechnung bzw. Lebensdauerabschätzung eingesetzt werden.

In einer besonders zweckdienlichen Ausführungsform des Verfahrens wird wenigstens eine der vorausgewählten Komponenten aus dem Komponentenverbund entnommen, bevor sie dem Bewertungsverfahren zugeführt wird. Diese Entnahme kann beispielsweise durch Entlöten erfolgen. Je nach Vorauswahl und Menge der aus einer Baugruppe ausgewählten Bauteile ist bekannt, welches bei dem Zurückbauen von besonderer Bedeutung ist und auf keinen Fall beschädigt werden darf. Dies kann von besonderer Hilfe sein, wenn es um schwer zugängliche Komponenten geht, und wenn beispielsweise Temperaturschritte zur Entnahme erforderlich sind.

In einer weiteren vorteilhaften Ausgestaltung der Erfindung umfasst der Schritt des automatisierten Datenabgleichs eine Deltaanalyse bzw. wird der automatisierte Datenabgleich als Deltaanalyse ausgeführt. Unter einer Deltaanalyse ist dabei zu verstehen, dass ein relativ schneller und einfacher Datenabgleich zwischen dem Bauelementausgangszustand und dem Bauelementzustand nach Feldrücklauf stattfindet. Dieser Datenabgleich berücksichtigt insbesondere externe Strukturen des Bauelements bzw. der Komponente. Die Deltaanalyse berücksichtigt dabei also z. B. einen Datenabgleich zwischen visuell erfassbaren Unterschieden an Lötstellen, Bauteilgeometrie oder Anschlusspintoleranzen. Insbesondere wird für den automatisierten Datenabgleich ein optisches Prüfverfahren eingesetzt, insbesondere eine AOI (Automatische optische Inspektion). Dies hat zudem den Vorteil, dass der Komponentenverbund nach Feldrücklauf unverändert diesem ersten Schritt des Verfahrens zugeführt werden kann und ein sehr schneller Zugang zu einer ersten Vorauswahl potenziell geeigneter Komponenten getroffen werden kann. Bis zu diesem Zeitpunkt des Verfahrens ist keinerlei aufwändiger Rückbauschritt erforderlich. Bis zu diesem Zeitpunkt des Verfahrens ist auch kein aufwändiger Berechnungsschritt erforderlich.

In einer beispielhaften Ausführungsform des Verfahrens werden bei dem automatisierbaren Datenabgleich bauteilspezifische Daten zugrunde gelegt, welche umfassen:
- Komponentenspezifikationen und/oder
- spezifische Prozessdaten und/oder
- elektrische Kenndaten und/oder
- geometrische Spezifikationen und/oder
- Kenndaten.

Komponentenspezifikationen werden insbesondere nach der Herstellung festgelegt. Spezifische Prozessdaten können beispielsweise während der Produktion mitgeschrieben werden. Elektrische Kenndaten umfassen beispielsweise Spannungsfestigkeit oder Verlustleistung. Unter geometrische Spezifikationen fallen Toleranzen, Pins und/oder Anschlussflächen. Kenndaten der Lötbarkeit umfassen Schichtdicken oder weitere Daten zur visuellen Inspektion.

Bevorzugt sind bei dem erfindungsgemäßen Verfahren oder einer seiner Ausführungsformen die dem automatisierbaren Datenabgleich zugrunde liegenden Daten in einer Datenbank oder in einem baugruppeneigenen bzw. komponenteneigenen Speicher abgelegt. Ein baugruppen- oder komponenteneigener Speicher macht das Verfahren unabhängig von der Prüfstation. Komponenteneigene Speicher werden auch zunehmend zur Identifikation eingesetzt.

In einer weiteren zweckdienlichen Ausführungsform des Verfahrens umfassen die dem Bewertungsverfahren zugrunde liegenden komponentenspezifischen Daten Informationen zu Schädigungs- und/oder Degradationsmechanismen. Dies hat den Vorteil, dass dieses Wissen über Schädigungs- und Degradationsmechanismen in die Bewertung der Lebensdauer miteinfließen kann. Beispielsweise werden im Vorfeld, also insbesondere bereits während der Produktentwicklung, für die Bauteile bzw. Bauteilkomponenten oder auch Komponentenverbände wie baugruppenspezifische Schädigungsmechanismen definiert. Beispiele hierfür sind mechanische Abrasion von Steckverbindern, der Feuchtigkeitsgehalt von Kunststoffen, Änderungen elektrischer Kennwerte oder das Durchwachsen einer intermetallischen Phase. Mit den Daten zu diesen Kenntnissen kann eine besonders zuverlässige Abschätzung der Restlebensdauer im Bewertungsverfahren erfolgen.

Besonders bevorzugt werden in dem Verfahren im zweiten Schritt, dem Bewertungsverfahren, diese Informationen zu Schädigungs- und/oder Degradationsmechanismen noch zu einem Zeitverlauf korreliert. Diese Korrelation von Schädigung und typischem zeitlichem Verlauf erhöht noch einmal die Qualität der Restlebensdauervorhersage. Beispiele hierfür sind z. B. das Auftreten spezifischer Schädigungsmerkmale zu bestimmten Lebenszykluszeitpunkten. Dann wird in dem Bewertungsverfahren ein Vergleich mit zuvor definierten Akzeptanzkriterien vorgenommen. Und schließlich kann daraus eine sehr zuverlässige Abschätzung der Restlebensdauer erfolgen.

In einer besonders vorteilhaften Ausführungsform des Verfahrens sind in dem Bewertungsverfahren Daten zu berücksichtigen, welche feldeinsatzspezifische Daten, insbesondere Einsatzprofile enthalten.

Insbesondere die Kombination von Berechnungs- und Bewertungsgrundlagen aus bauteil-, baugruppen- und/oder bauteilkomponentenspezifischen Daten mit zusätzlich auch feldeinsatzspezifischen Daten führt zur erhöhten Zuverlässigkeit der Vorhersage.

Feldeinsatzspezifische Daten können Mission Profils sein, die einen Aufschluss über die Umweltbelastungen geben, denen das Produkt ausgesetzt war. Feldeinsatzspezifische Daten können auch Einsatzprofile sein, die Informationen über die Nutzung vermitteln. Insbesondere wird zur Generierung der feldeinsatzspezifischen Daten, kurz Felddaten, während des Betriebs der Zustand des elektrischen Systems oder der Baugruppe oder des Produkts erfasst und bei Schwellwertüberschreitungen Daten registriert, z. B. durch Querschnitteinengungen, Risse, veränderte Widerstandswerte. Aus derartigen Daten können sehr gut Rückschlüsse auf die Restlebensdauer gezogen werden. Dieses Datentracking dient dann als Bewertungsparameter, welche in das Bewertungsverfahren einfließt.

Zusammenfassend kann also festgehalten werden, dass für das erfindungsgemäße Verfahren bevorzugt in einem ersten Schritt bauteilspezifische Daten, insbesondere externer Strukturen automatisiert beurteilt werden, bevor in einem zweiten Schritt sowohl bauteilspezifische Daten aber auch feldeinsatzspezifische Daten einem Bewertungsverfahren zugeführt werden, welches insbesondere ein Berechnungsverfahren zur Abschätzung der Restlebensdauer umfasst. Die bauteilspezifischen Daten für das Bewertungsverfahren werden bevorzugt bei der Herstellung bzw. Prüfung und Qualitätskontrolle gewonnen. Die feldeinsatzspezifischen Daten werden bevorzugt aus Mission Profils und Einsatzprofilen ermittelt. Als Berechnungsverfahren werden bevorzugt Coffin Manson oder lineare Schadensmodelle herangezogen. Als automatisierter Datenabgleich wird besonders bevorzugt eine Deltaanalyse, insbesondere mit einem automatischen optischen Prüfverfahren herangezogen.

Daraus ergibt sich der Vorteil, dass Komponenten, deren geschätzte Lebensdauer deutlich über der zu erwartenden Produkt- bzw. Baugruppenlebensdauer liegt, einem Re-Use-Prozess zugeführt werden können. Der Vorteil dieser Vorgehensweise liegt insbesondere darin, mit wenigen Analyseschritten eine geeignete Auswahl von Komponenten, die für ein Re-Use geeignet sind, treffen zu können.

Die erfindungsgemäße Anordnung zur Durchführung eines erfindungsgemäßen Verfahrens umfasst eine Abgleichvorrichtung mit Prüfadaptern für den automatisierbaren Datenabgleich sowie eine Recheneinheit zur Ausführung des Bewertungsverfahrens.

Jede Baugruppe, jede Komponente oder jedes elektronische Produkt erfordert entsprechend spezifische Prüfadapter, um auf produkteigene Kenndaten, insbesondere die internen Produktkenndaten zugreifen zu können. Derartige Prüfadapter werden beispielweise in Repair-Centern eingesetzt.

In einer Ausgestaltungsform der Anordnung umfasst die Abgleichvorrichtung eine Speichereinheit, welche, die dem automatisierbaren Datenabgleich zugrunde liegenden, Daten enthält. Insbesondere umfasst die Abgleichvorrichtung eine optische Prüfvorrichtung für ein optisches Prüfverfahren.

Zweckdienlicherweise umfasst die Anordnung in einer Ausführungsform der Erfindung eine Bewertungssoftware, welche anhand der komponentenspezifischen als auch feldeinsatzspezifischen Daten eine Abschätzung der verbleibenden Restlebensdauer der zu bewertenden Komponenten ermittelt.

Die Recheneinheit umfasst dabei insbesondere eine Speichereinheit, welche Korrelationsdaten zwischen Schädigungsmerkmalen und Lebenszykluszeitpunkten enthält. Dies ist besonders zweckdienlich zur Durchführung eines Verfahrens, bei dem komponentenspezifische Daten, die dem Bewertungsverfahren zugeführt werden, Informationen zu Schädigungs- und/oder Degradationsmechanismen enthalten, welche mit einem Zeitverlauf korreliert sind. Zudem können insbesondere Daten zu definierten Akzeptanzkriterien für die Bewertung herangezogen werden, die beispielsweise ebenso in der Speichereinheit der Recheneinheit abgelegt sind. Alternativ zur Datenspeicherung in der Anordnung zur Komponentenbewertung können die Komponenten selbst auf komponenteneigenen Speichereinheiten die erforderlichen Daten für den Datenabgleich, sowie in der Deltaanalyse, als auch in dem Bewertungsschritt mitbringen.

Zusammenfassend enthält die Anordnung also eine Abgleichvorrichtung, insbesondere für die erste schnelle visuelle Kontrolle externer Strukturen, und, nach erfolgter Vorauswahl, eine Vorrichtung zur Auslesung interner Strukturen, insbesondere von Kenndaten, welche dann einer Recheneinheit zur Berechnung der Lebensdauer zugeführt werden.

Besonders wertvoll ist das Verfahren mit Blick auf Komponenten, deren Rohstoffe aufgrund von Preis bzw. Verfügbarkeit sehr wertvoll sind. Derartige Komponenten können dann weiterverwendet werden. Ein Anwendungsfall kann auch die Ersatzteilvorhaltung sein, die in verschiedenen Industriebereichen bis zu 30 Jahre erforderlich sein kann. Insbesondere im Bereich bereits abgekündigter Bauteile kann das vorgeschlagene Verfahren von großem Nutzen sein, Ersatzteile aus Feldrückläufern zu identifizieren.

Weitere Merkmale, Eigenschaften und Vorteile der vorliegenden Erfindung ergeben sich aus der nachfolgenden Beschreibung unter Bezugnahme auf die beiliegenden Figuren. In den Ausführungsbeispielen und Figuren können gleiche oder gleich wirkende Elemente jeweils mit den gleichen Bezugszeichen versehen sein. Die dargestellten Elemente und deren Größenverhältnis untereinander sind grundsätzlich nicht als maßstabsgerecht anzusehen, vielmehr können einzelne Elemente zur besseren Darstellbarkeit und/oder zum besseren Verständnis im Verhältnis größer dimensioniert dargestellt sein. In den Figuren zeigen schematisch
- Figur 1: die verschiedenen Ansatzpunkte des Verfahrens,
- Figur 2: ein vereinfachtes Ablaufdiagramm des Verfahrens.

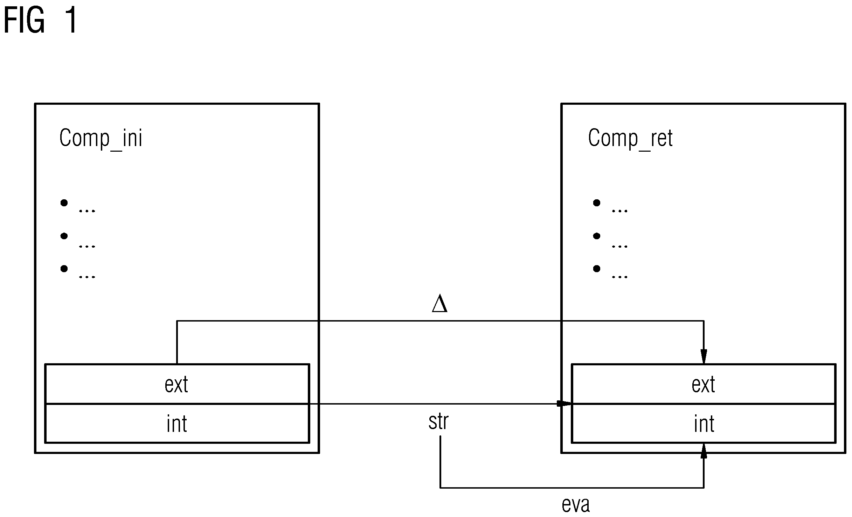

In der Figur 1 sind zunächst zwei Kästen gezeigt, welche das Bauelement bzw. die Komponente im Ausgangszustand comp_ini sowie das Bauelement bzw. die Komponente als Feldrückläufer also nach dem Feldeinsatz comp_ret symbolisieren. In beiden Fällen haften der Komponente comp_ini sowie comp_ret Eigenschaften an, die es abzugleichen gilt. Das Bauelement im Ausgangszustand comp_ini ist durch Prozessdaten, BI-Spezifikationen, sowie aus Qualitäts- und Produkttests gewonnenen Informationen zu Degradationsverhalten bezeichnet. All diese Eigenschaften können externe und innere Strukturen eingeteilt werden, wobei als externe Struktur insbesondere visuell sichtbare Eigenschaften fallen und unter innere Strukturen Eigenschaften, die beispielsweise durch elektrische Testung oder Auswertungsdaten von Qualitätstests fallen. Der Rückläufer comp_ret ist noch um Eigenschaften wie Felddaten, Feld-, Anwendungs- und Umweltbelastungen, sowie entsprechende Schädigungen reicher an bewertbaren Eigenschaften. Bei der Deltaanalyse wird bevorzugt auf diese externen Strukturen ext zugegriffen und ein Datenabgleich, insbesondere ein automatisierbares Verfahren zum Datenabgleich Δ, vorgenommen. Dieser umfasst insbesondere optische Verfahren zum Sichtvergleich z. B. von Lötstellen, Geometrie oder Anschlusspintoleranzen.

Wenn die Deltaanalyse Δ keinen Hinweis auf Defekte oder Schädigungen an dem Bauteil comp_ret oder dem Bauteilverbund und mehreren Bauteilen des Bauteilverbunds gibt, werden diese dem zweiten Schritt der Degradationsbewertung eva zugeführt. Insbesondere kann dazu eine einzelne Komponente aus dem Komponentenverbund entnommen und nur diese Komponente dem zweiten Schritt der Degradationsbewertung zugeführt werden. Bei der Degradationsbewertung eva wird bevorzugt auf die inneren Strukturen des Bauteils int zugegriffen, welche beispielsweise durch Testungen wie elektrische Tests, SAM, X-Ray oder ähnliches genauer ausgewertet werden können. Zusätzlich dazu wird der Berechnungsschritt im Bewertungsverfahren mit Informationen aus der Feldbelastung gespeist, mit Felddaten und/oder Schädigungsmechanismen.

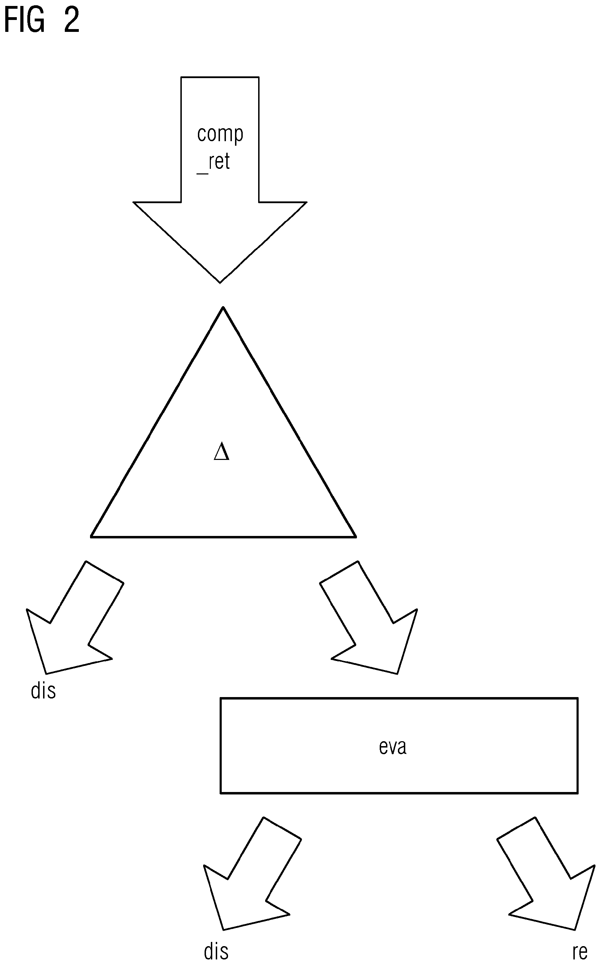

In der Figur 2 ist ein Flussdiagramm gezeigt, welches den Ablauf des erfindungsgemäßen Verfahrens stark vereinfacht symbolisiert. Dem Verfahren wird ein Feldrückläufer comp-ret zugeführt, was eine elektrische Komponente, ein Bauteil oder eine Bauteilkomponente sein kann. Diese liegt insbesondere in einem Komponentenverbund, also noch im gesamten im Feld eingesetzten Produkt dem ersten Schritt des Verfahrens vor. In diesem ersten Schritt wird ein Datenabgleich Δ, insbesondere ein automatisierten Datenabgleich, bevorzugt in Form einer Deltaanalyse vorgenommen. Mittels dieser Deltaanalyse wird eine erste Vorauswahl potenziell geeigneter Komponenten für eine Wiederverwendung getroffen. Komponenten, die bereits nach der Sichtkontrolle keinen Hinweis auf Wiederverwendbarkeit geben, werden nach diesem ersten Schritt aussortiert dis, was durch einen aus dem System herausführenden Pfeil symbolisiert ist. Die Vorauswahl wird, ebenfalls durch einen Pfeil symbolisiert, dem zweiten Schritt des Verfahrens, der Bewertung eva, zugeführt. Die Deltaanalyse Δ entscheidet, welche Komponenten comp_ret der genaueren Auswertung und Bewertung durch eine Lebensdauerberechnung eva anhand von internen Daten int sowie Felddaten zugeführt werden. Entsprechend ungeeignete Komponenten werden auch hier aussortiert dis. Komponenten, die eine vielversprechende Restlebensdauer aufweisen, werden einem Re-Use zugeführt. Ein Re-Use kann eine direkte Wiederverarbeitung in einem neuen Bauteil oder einem neuen Komponentenverbund sein. Ein Re-Use kann aber auch eine Ersatzteilvorratshaltung sein.

Zusammenfassend wird festgehalten, dass in dem erfindungsgemäßen Verfahren zur Bestimmung von Re-Use-Möglichkeiten, insbesondere einzelner Komponenten aus einem elektronischen Produkt, in einem ersten Schritt eine Deltaanalyse der Komponentenspezifikationen durchgeführt wird und in einem zweiten Schritt eine Abschätzung der Restlebensdauer anhand von spezifischen Schädigungs- und Degradationsmechanismen der Komponenten erfolgt.

Bevorzugt kann das Verfahren auf Produkte bzw. Komponenten angewendet werden, bei denen schon während der Produktion spezifische Prozessdaten mitgeschrieben und beispielsweise in einer Datenbank hinterlegt werden. Die Daten sind dafür insbesondere konkret für spezifische Bauelementgruppen definiert. Zum Beispiel sind das elektrische Kenndaten wie Spannungsfestigkeit oder Verlustleistung. Auch geometrische Spezifikationen wie Toleranzen, Pins oder Anschlussflächen können zu diesen bauelementspezifischen Daten zählen. Zusätzlich können Kenndaten der Lötbarkeit herangezogen werden, wie beispielsweise eine Schichtdickenmessung oder eine visuelle Inspektion. Derartige Ausgangswerte ext können dann in einer Deltaanalyse mit den Werten der gleichen Bauelemente verglichen werden, die aus dem Feld zurückkommen. Der Vergleich erfolgt bevorzugt anhand automatischer optischer Verfahren. Sind keine Abweichungen vorhanden, kann die Baugruppe bzw. einzelne Komponenten daraus, zunächst für eine weitere Verwendung vorgemerkt werden (Vorauswahl). Zu diesem Zeitpunkt ist noch keine Aussage über die Restlebensdauer getätigt worden. Dies hat schon den Vorteil, dass mit sehr wenigen automatisierbaren Prüfungen, wie z. B. einer AOI, eine erste Vorauswahl potenziell geeigneter Komponenten für ein Re-Use getroffen werden kann.

Für die bessere zuverlässigere Einschätzung der Restlebensdauer werden bevorzugt, ebenso im Vorfeld, z. B. in der Produktentwicklung, für die Bauelemente einer Gruppe spezifische Schädigungsmechanismen definiert. Beispiele hierfür sind mechanische Abrasion von Steckverbindern, Feuchtigkeitsgehalt von Kunststoffen, Änderungen elektrischer Kennwerte oder das Durchwachsen einer intermetallischen Phase. Diese für eine Baugruppe oder eine Komponente typischen Schädigungsmechanismen int werden bevorzugt noch in einen zeitlichen Verlauf gebracht, d. h. Schädigungsmechanismen und Lebensdauer bzw. Zeitpunkt des Eintritts der Schädigung werden korreliert. Aus manchen dieser Daten können beispielsweise dann beschleunigte Alterungen festgestellt werden und entsprechend die Restlebensdauer daraus abgeleitet werden. Jeweils für eine Bauelementgruppe kann das Auftreten spezifischer Schädigungsmerkmale im bestimmten Lebenszykluszeitpunkt bestimmt und davon dann die Restlebensdauervorhersage abgeleitet werden. Daraus können für jeweils spezifische Bauelemente bzw. Komponenten davon anhand der festgestellten Schädigungen nach dem Feldeinsatz und im Vergleich mit den vorher definierten Akzeptanzkriterien, Abschätzungen für eine mögliche Restlebensdauer getätigt werden.

Die Abschätzung der Restlebensdauer wird noch zuverlässiger, wenn während des Betriebs der Zustand des elektrischen Systems erfasst wird und beispielsweise bei Schwellwertüberschreitungen Daten mitgeschrieben werden, welche dann Rückschlüsse auf die Restlebensdauer geben können. Solche Schwellwertüberschreitungen können beispielsweise Querschnitteinengungen, Risse oder veränderte Widerstandswerte sein. Komponenten, deren geschätzte Lebensdauer deutlich über den erwarteten Produktzyklus liegt, können einem Re-Use-Prozess re zugeführt werden. Der Vorteil dieses Verfahrens und dieser Vorgehensweise liegt also darin, dass relativ wenig Analyseschritte notwendig sind, um eine geeignete Vorauswahl und dann eine zuverlässige Vorhersage für Re-Use geeignete Komponenten getroffen werden kann.

Der Vorteil liegt darin, dass ein fehlerhaft aus dem Feld zurückgekommenes Produkt nicht sofort aussortiert und einem Recyclingprozess zugeführt wird, sondern dass gezielt eine Weiterverwendung von einzelnen Komponenten oder Komponentengruppen erfolgen kann. Beispielsweise kann ein Steckverbinder, der sich in seinen geometrischen Dimensionen und seinen thermischen Eigenschaften im Vergleich mit dem Ausgangszustand nicht verändert hat und dessen Oberflächenfinish keine Schädigungen aufzeigt, bzw. diese in einem separaten Schritt refreshed werden können, erneut in einem Produkt eingesetzt werden.

Besonders vorteilhaft ist das dargelegte Vorgehen aber für teure und rare Bauelemente, welche z. B. Materialien wie seltene Erden aufweisen. Besonders effektiv ist der Re-Use für Bauelemente, welche gleichzeitig leicht zu montieren und entsprechend leicht zu demontieren sind. Der Prozess des Materialrecyclings wird damit weiter hinausgezögert und die Nachhaltigkeit des Gesamtprodukts verbessert.

### Bezugszeichen

- comp (ini): Bauelement, bzw. Komponente im Ausgangszustand
- data (ini): Prozessdaten, BE Spezifikationen
- comp (ret): Bauelement, bzw. Komponente als Feldrückläufer

- ext: Daten zu externe Strukturen
- int: Daten zu interne Strukturen
- str: Daten zu field strain/stress, Feldbelastung, BE Spezifikationen, Felddaten, Schädigungsmechanismen

- Δ: Deltaanalyse - Datenabgleich, Automatische/Automatisierte Verfahren, umfassend auch opt. Verfahren zum Sichtvergleich von z.B. Lötstellen, Geometrie, Anschlusspintoleranzen.
- eva: evaluation - Degradationsbewertung, Schädigung in-nerer Strukturen, elektrische Tests, SAM, x-ray
- dis: verwerfen
- re: Reuse/ Repair

## Patentansprüche

1. Verfahren zur Lebensdauerabschätzung diskreter elektronischer Komponenten nach einem Feldeinsatz (comp_ret), umfassend einen ersten Schritt mit einem automatisierbaren Datenabgleich (Δ) sowie einen zweiten Schritt mit einem Bewertungsverfahren (eva), basierend auf Daten (int), welche komponentenspezifische als auch feldeinsatzspezifische Daten umfassen.

2. Verfahren nach Anspruch 1, wobei die diskreten elektronischen Komponenten (comp_ret) für den automatisierbaren Datenabgleich (Δ) in einem Komponentenverbund vorliegen.

3. Verfahren nach Anspruch 1 oder 2, wobei auf Basis eines Ergebnisses des automatisierbaren Datenabgleichs (Δ) eine Vorauswahl von Komponenten erfolgt, welche dem Bewertungsverfahren (eva) zugeführt werden.

4. Verfahren nach Anspruch 2 und 3, wobei wenigstens eine der vorausgewählten Komponenten aus dem Komponentenverbund entnommen wird, bevor sie dem Bewertungsverfahren (eva) zugeführt wird.

5. Verfahren nach einem der vorstehenden Ansprüche, wobei der automatisierbare Datenabgleich (Δ) eine Deltaanalyse umfasst oder als Deltaanalyse ausgeführt wird.

6. Verfahren nach einem der vorstehenden Ansprüche, wobei der automatisierbare Datenabgleich ein optisches Prüfverfahren, insbesondere eine AOI (automatische optische Inspektion) umfassen kann.

7. Verfahren nach einem der vorstehenden Ansprüche, wobei dem automatisierbaren Datenabgleich (Δ) bauteilspezifische Daten (ext) zu Grunde gelegt werden, welche umfassen:
- Komponentenspezifikationen und/oder
- Prozessdaten
- elektrische Kenndaten und/oder
- Geometrische Spezifikationen und/oder
- Kenndaten der Lötbarkeit.

8. Verfahren nach einem der vorstehenden Ansprüche, wobei die dem automatisierbaren Datenabgleich (Δ) zu Grunde liegenden Daten (ext) in einer Datenbank oder in einem baugruppeneigenen oder komponenteneigenen Speicher abgelegt sind.

9. Verfahren nach einem der vorstehenden Ansprüche, wobei die, dem Bewertungsverfahren (eva) zu Grunde liegenden, komponentenspezifischen Daten (int), Informationen zu Schädigungs- und/oder Degradationsmechanismen enthalten.

10. Verfahren nach Anspruch 9, wobei die Informationen zu Schädigungs- und/oder Degradationsmechanismen zu einem Zeitverlauf korreliert werden.

11. Verfahren nach einem der vorstehenden Ansprüche, wobei die dem Bewertungsverfahren (eva) zu Grunde liegenden feldeinsatzspezifischen Daten (str), Einsatzprofile enthalten.

12. Anordnung zur Durchführung eines Verfahrens gemäß einem der Ansprüche 1 bis 11 umfassend eine Abgleichvorrichtung für den automatisierbaren Datenabgleich (Δ) sowie eine Recheneinheit zur Ausführung des Bewertungsverfahrens (eva).

13. Anordnung nach Anspruch 12, wobei die Abgleichvorrichtung eine Speichereinheit umfasst, welche die dem automatisierbaren Datenabgleich (Δ) zu Grunde liegenden Daten (ext) enthält.

14. Anordnung nach Anspruch 12 oder 13, wobei die Recheneinheit eine Bewertungssoftware umfasst, welche anhand der komponentenspezifischen (int) als auch feldeinsatzspezifischen Daten (str) eine Abschätzung der verbleibenden Restlebensdauer der zu bewertenden Komponente ermittelt.

15. Anordnung nach Anspruch 14, wobei die Recheneinheit eine Speichereinheit umfasst, welche Korrelationsdaten zwischen Schädigungsmerkmalen und Lebenszykluszeitpunkten enthält.
